Europäisches Patentamt

European Patent Office

Office européen des brevets

(11) Numéro de publication: **0 182 714**
A1

## DEMANDE DE BREVET EUROPEEN

(21) Numéro de dépôt: 85402216.7

(22) Date de dépôt: 15.11.85

(51) Int. Cl.⁴: **B 64 D 7/08,** F 41 F 3/06

(30) Priorité: 16.11.84 FR 8417494

(71) Demandeur: **AVIONS MARCEL DASSAULT-BREGUET AVIATION, 27, Rue du Professeur Victor Pauchet, F-92420 Vaucresson (FR)**

(43) Date de publication de la demande: 28.05.86
Bulletin 86/22

(72) Inventeur: **Dupin, Gérard, 20, Boulevard des Frères Vigouroux, F-92140 Clamart (FR)**
Inventeur: **Dupont, Moise, 116, rue des Monts Clairs, F-92700 Colombes (FR)**

(74) Mandataire: **de Boisse, Louis et al, CABINET DE BOISSE 37, Avenue Franklin D. Roosevelt, F-75008 Paris (FR)**

(84) Etats contractants désignés: **DE GB IT SE**

(54) **Dispositif d'éjection d'une charge accrochée sous un avion de hautes performances.**

(57) Dispositif d'éjection d'une charge accrochée sous un avion, propre à imprimer à cette charge au moment de son largage des valeurs cinématiques contrôlées en fonction des paramètres instantanés de vol de l'avion à ce moment.

Une pluralité de modules distincts (1, 2A, 2B, 4, 10) permet, d'une part, une translation longitudinale (d) de la charge (3) pour la dégager de ses organes (5) d'accrochage à l'avion et, d'autre part, un réglage précis de la vitesse angulaire d'éjection. L'un des modules est une source d'énergie (1) telle qu'une bouteille d'azote comprimé. Deux autres modules sont respectivement un vérin à fluide avant (2A) et un vérin à fluide arrière (2B), l'un et l'autre à piston télescopique rétractable qui, lorsque du gaz sous pression lui est délivré par la source (1), exerce un effort d'éjection sur la charge (3).

Application au largage de charges portées par avion.

- 1 -

## Dispositif d'éjection d'une charge accrochée sous un avion de hautes performances.

Les avions militaires modernes emportent des charges diverses accrochées soit sous le fuselage, soit sous la voilure, lesquelles charges sont la plupart du temps largables en vol, principalement lorsqu'il s'agit de bombes ou de missiles.

Pour assurer une bonne séparation entre la charge et l'avion dans un large domaine de ses conditions de vol, il ne suffit pas de décrocher la charge : encore faut-il lui communiquer une vitesse linéaire d'éjection $V_z$ et une vitesse angulaire d'éjection $\omega_y$. On détermine ces deux grandeurs $V_z$ et $\omega_y$ par des essais d'éjection en soufflerie. Leur valeur n'est pas constante, mais fonction des paramètres de vol : nombre de Mach, altitude, vitesse corrigée, incidence, facteur de charge. En général, on peut définir une grandeur $V_z$ minimale satisfaisante dans tout le domaine. Il n'en est pas de même pour la grandeur $\omega_y$ qui est très variable selon les conditions de vol.

Les systèmes d'éjection qui existent à l'heure actuelle en aéronautique doivent faire l'objet d'un réglage au sol et ne sont donc optimisés que pour une seule condition de vol au moment du largage.

La présente invention a pour objet la réalisation d'un dispositif d'éjection modulaire capable, d'une part, d'assurer une translation horizontale du missile pour le désolidariser de son rail avant éjection, et d'autre part, d'ajuster la vitesse angulaire d'éjection en fonction des paramètres de vol.

La description qui va suivre en regard des dessins annexés, donnée à titre d'exemple non limitatif, fera bien comprendre comment l'invention peut être réalisée.

La figure 1 est une vue schématique avec coupe longitudinale partielle illustrant un mode d'exécution de la présente invention.

Les figures 2 et 3 sont des vues en coupe à plus grande échelle d'un détail de réalisation dans deux positions de fonctionnement.

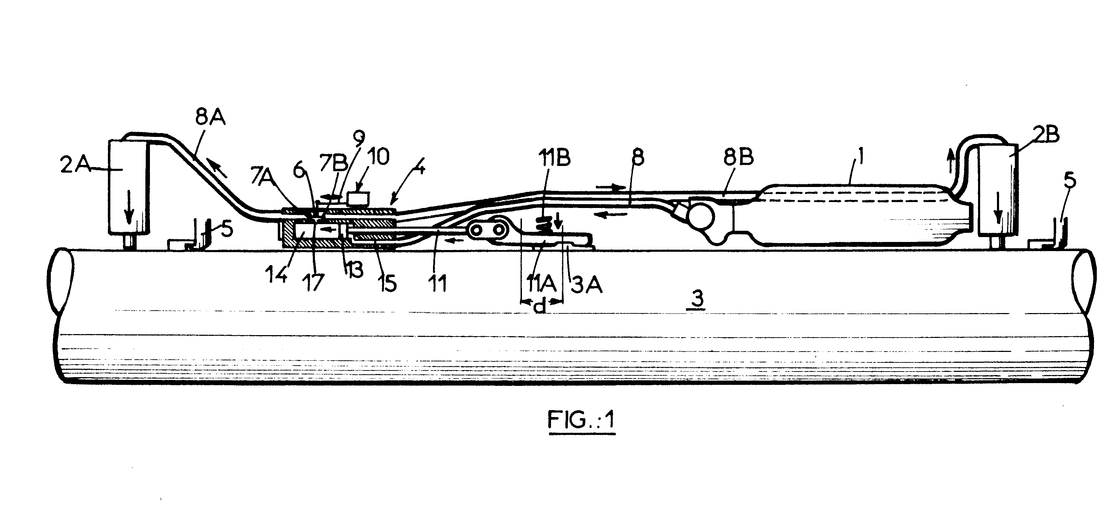

Le dispositif éjecteur illustré sur la figure 1 est constitué d'un assemblage de modules distincts ayant chacun une fonction particulière :

1°/ une source d'énergie 1 qui peut être une bouteille d'azote comprimé à quelques centaines de bars équipée d'une vanne pyrotechnique, ou bien une chambre pyrotechnique équipée d'un générateur de gaz (par exemple à étoupilles standard);

2°/ un vérin avant 2A à piston télescopique rétractable qui, lorsque du gaz sous pression lui est délivré à l'entrée, exerce sur la charge emportée 3 un effort d'éjection;

3°/ un vérin arrière 2B identique au vérin avant 2A;

4°/ un module séquentiel largage-éjection 4 qui est alimenté par la source d'énergie 1 et qui remplit trois fonctions :

- une fonction largage, par translation de la charge 3 hors de ses rails 5-5 d'accrochage à l'avion (le mouvement de translation sera une accélération-arrêt afin de ramener au voisinage de zéro la vitesse de translation de la charge 3 après l'avoir sortie de ses rails 5 et avant l'éjection);

- une fonction modulation de l'éjection qui, grâce à un tiroir asservi 6 à double pointeau 7A-7B, module la répartition de pression entre les vérins avant 2A et arrière 2B pour communiquer à la charge 3 une vitesse angulaire de tangage déterminée pour les conditions de vol instantanées de l'avion;

- une fonction séquentielle pour que la poussée d'éjection des vérins 2A, 2B ne puisse se développer que lorsque le mouvement d'accélération-arrêt est terminé.

On relie ces divers modules par des conduits de gaz sous pression. Plus précisément, la source d'énergie 1 est reliée à l'entrée du module séquentiel 4 par un conduit 8, tandis que les sorties de celui-ci, en aval des pointeaux 7A, 7B sont reliées respectivement au vérin avant 2A et au vérin arrière 2B par des conduits 8A et 8B. De son côté, la commande du tiroir à double pointeau asservi 6 est assurée par l'entremise d'une biellette de transmission 9, à partir d'un module d'asservissement 10 programmé pour intégrer les divers paramètres de vol convenablement détectés.

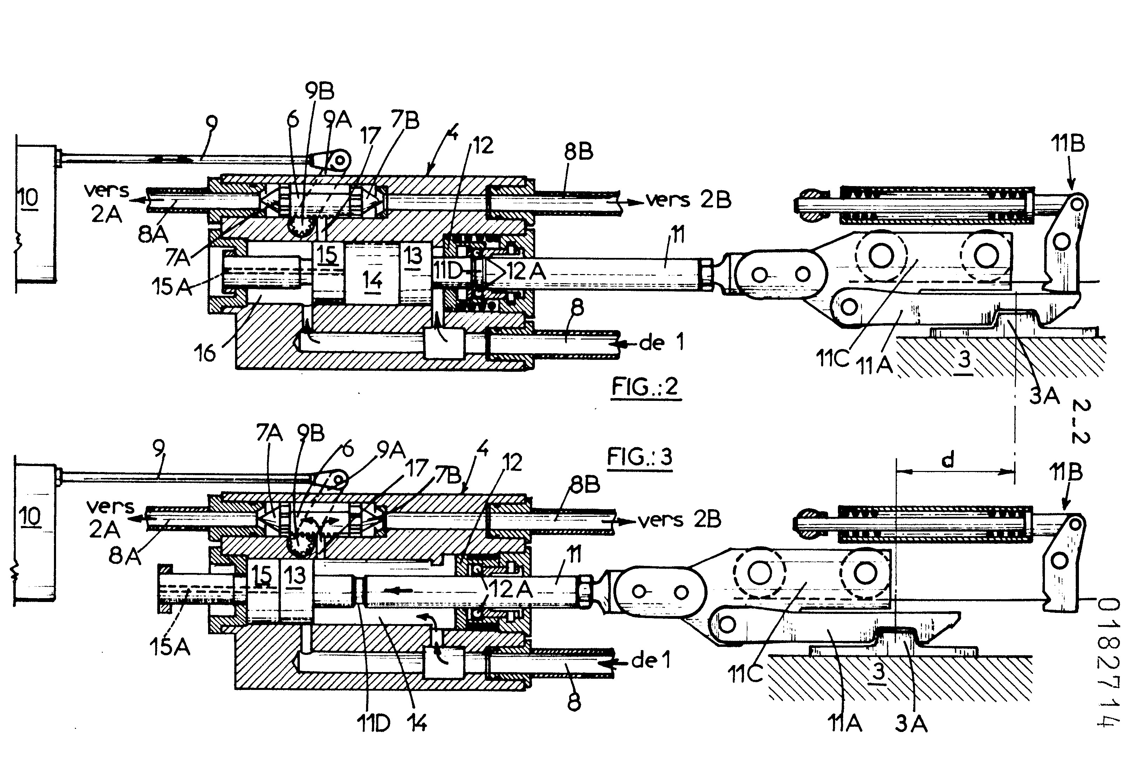

Le fonctionnement du module séquentiel 4 ci-dessus décrit en regard de la figure 1 sera mieux compris en se reportant à présent également aux figures 2 et 3 sur lesquelles on a repris les mêmes chiffres de référence pour désigner les mêmes éléments.

En sus de ceux-ci, on voit sur les dessins une tringle 11 de traction vers l'avant de la charge 3 pour la décrocher de ses rails 5, cette tringle 11 agissant sur un bossage 3A solidaire de la charge 3 par l'intermédiaire d'un mécanisme articulé à clenche 11A maintenue en prise, au repos (figure 2), par une butée élastique d'échappement 11B et guidée dans sa course longitudinale $\underline{d}$ (figure 3) par un chariot 11C. Cette tringle de traction 11 coopère avec un tiroir de verrouillage 12 à billes escamotables 12A en prise avec une gorge 11D pratiquée autour de la tringle 11, ce système étant représenté en position verrouillée sur la figure 2 et en position déverrouillée sur la figure 3.

La tringle 11 de traction de la charge 3 à système de verrouillage à billes 12 est solidaire d'un piston moteur 13 coulissant dans une chambre 14 en regard d'un piston de freinage 15 percé d'un évent 15A.

Les gaz sous pression en provenance de la bouteille 1, libérés par la vanne pyrotechnique, sont admis en tête de la chambre 14 par le conduit 8 et repoussent tout d'abord vers l'arrière le tiroir de verrouillage à billes 12 de la tringle de traction 11, déverrouillant celle-ci. Après quoi, cette tringle 11 ainsi libérée, les gaz repoussent le piston moteur 13 vers l'avant en entraînant la charge 3 dans un mouvement de translation, le déplacement du piston 13 n'étant pas contrarié par le fluide remplissant l'espace intercalaire qui s'étend entre les pistons 13 et 15, grâce à l'évent 15A pratiqué dans ce dernier.

Après une certaine course le piston moteur 13 vient en contact avec le piston de freinage 15 qu'il entraîne à son tour, les deux pistons 13-15 se déplaçant alors de concert.

Les gaz moteurs en provenance du conduit 8 ont été admis dès l'origine dans une **chambre** de freinage 16 située derrière le piston de freinage 15. Aussitôt que ce dernier est repoussé, il commence sa fonction de freinage, car les gaz de la chambre de freinage 16 se trouvent enfermés. Lorsque l'ensemble des pistons a parcouru une course déterminée, un conduit de transfert 17 se trouve démasqué et délivre les gaz sous pression au tiroir à double pointeau 6 qui assure le dosage des débits vers les vérins d'éjection 2A, 2B et qui est positionné à chaque instant selon une loi d'asservissement liée aux paramètres de vol de l'avion, par le module d'asservissement 10 auquel le tiroir 6 est attelé par la biellette de transmission 9 complétée par une manivelle 9A solidaire d'un pignon 9B engrénant avec le tiroir.

Le dispositif qui vient d'être décrit dans son organisation et son fonctionnement, procure de nombreux avantages techniques :

- modularité du système qui peut s'adapter à des charges 3 de dimensions très différentes et à des structures porteuses très diverses.

En effet la position géométrique des divers modules du système n'est pas imposée comme lorsqu'il s'agit d'un éjecteur monobloc.

- système de hautes performances.

La régulation automatique instantanée, en vol, de la position du boisseau 6 commandant la vitesse angulaire d'éjection permet, lors d'un tir missile pendant des évolutions de combat, de garantir la meilleure mise sur trajectoire possible du missile.

- grande légèreté du système car :

les efforts d'éjection n'apparaissent qu'au niveau des vérins d'éjection 2A, 2B, aucune timonerie mécanique n'étant nécessaire,

le tiroir 6 du distributeur est un équipage équilibré qui peut être commandé avec de faibles efforts et de faibles courses, ce qui est favorable au bon fonctionnement de ce système asservi,

- efficacité du système accélération-arrêt.

Ce dispositif assure la sortie du missile 3 de ses rails 5 grâce à un déplacement horizontal sur une course déterminée $d$ selon une loi accélération-décélération qui dans un temps minimum met le missile en position d'éjection, à vitesse voisine de zéro.

Cette dernière caractéristique

évite tout risque de glissement important des tiges des vérins d'éjection 2A, 2B lors de leur poussée sur la charge 3 et élimine ainsi les risques d'endommagement du vérin ou de la charge,

assure une trajectoire initiale d'éloignement du missile 3 perpendiculaire à l'axe missile, ce qui permet d'éjecter un missile semi-encastré dans la forme d'un fuselage sans risque d'accrochage à la sortie, à la seule condition que, dans l'alvéole de logement du missile, un dégagement de longueur égale à la course $d$ d'avancement du missile soit ménagé (quelques centimètres).

Il va de soi que le mode de réalisation décrit n'est qu'un exemple et qu'on pourrait le modifier, notamment par substitution d'équivalents techniques, sans sortir pour cela du cadre de l'invention.

0182714

## REVENDICATIONS

1. Dispositif d'éjection d'une charge accrochée sous un avion, propre à imprimer à cette charge au moment de son largage des valeurs cinématiques contrôlées en fonction des paramètres instantanés de vol de l'avion à ce moment,

caractérisé par la coopération organique et fonctionnelle d'une pluralité de modules distincts (1, 2A, 2B, 4, 10) dont l'assemblage permet, d'une part, une translation longitudinale (d) de la charge (3) pour la dégager de ses organes (5) d'accrochage à l'avion et, d'autre part, un réglage précis de la vitesse angulaire d'éjection ($\omega$ y).

2. Dispositif d'éjection selon la revendication 1, caractérisé en ce que l'un des modules est une source d'énergie (1) telle qu'une bouteille d'azote comprimé à quelques centaines de bars, équipée d'une vanne pyrotechnique, ou bien une chambre pyrotechnique équipée d'un générateur de gaz.

3. Dispositif d'éjection selon la revendication 2, caractérisé en ce que deux autres modules sont respectivement un vérin à fluide avant (2A) et un vérin à fluide arrière (2B), l'un et l'autre à piston télescopique rétractable qui, lorsque du gaz sous pression lui est délivré par la source (1), exerce un effort d'éjection sur la charge (3).

4. Dispositif d'éjection selon la revendication 3, caractérisé en ce qu'un autre module est un appareil séquentiel largage-éjection (4) conçu et agencé pour remplir une triple fonction : une première fonction de largage par translation de la charge (3) hors de ses rails d'accrochage (5) avec accélération de la charge (3) depuis le repos puis décélération de celle-ci jusqu'au voisinage de l'arrêt, une seconde fonction de dosage de

- 2 -                                    0182714

la répartition de pression entre les vérins avant (2A)
et arrière (2B) pour communiquer à la charge (3) une
vitesse angulaire de tangage déterminée ($\omega$ y), et une
troisième fonction de séquence **pour** que la poussée imprimée par les vérins (2A, 2B) sur la charge (3) ne
puisse se développer que lorsque le mouvement d'accélération-décélération de la charge est achevé.

5. Dispositif d'éjection selon la revendication 4,
caractérisé en ce que la seconde fonction de dosage
de la répartition de pression entre les vérins (2A, 2B)
fait intervenir un distributeur (6) asservi à un module
d'asservissement (10) programmé pour intégrer les divers
paramètres de vol de l'avion convenablement détectés.

6. Dispositif d'éjection selon la revendication 5,
caractérisé en ce que le distributeur (6) comporte
un tiroir à double pointeau (7A, 7B) relié par toute
transmission adéquate au module d'asservissement (10).

FIG.:1

0182714

FIG.:2

FIG.:3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 043 525 (T. JAKUBOWSKI Jr.)<br>* Colonne 3, ligne 30 - colonne 4, ligne 13; colonne 4, lignes 33-38; figure 1 * | 2,5,6 | B 64 D 7/08<br>F 41 F 3/06 |
| | --- | | |
| A | FR-A-2 218 244 (ML AVISTON CO.)<br>* Page 4, revendications 1,2 et 4; figure 1 * | 1-4 | |
| | ----- | | |

DOMAINES TECHNIQUES
RECHERCHES (Int. Cl.4)

B 64 D
F 41 F

Le present rapport de recherche a été établi pour toutes les revendications

| Lieu de la recherche | Date d'achèvement de la recherche | Examinateur |
|---|---|---|
| LA HAYE | 24-01-1986 | MARTINOZZI G.M.E. |